(19) Europäisches Patentamt
European Patent Office
Office européen des brevets

(11) **EP 3 064 038 B1**

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(21) Anmeldenummer: **14793474.9**

(22) Anmeldetag: **22.10.2014**

(51) Int Cl.:
***H05B 45/375*** (2020.01)

(86) Internationale Anmeldenummer:
**PCT/EP2014/072617**

(87) Internationale Veröffentlichungsnummer:
**WO 2015/062925 (07.05.2015 Gazette 2015/18)**

(54) **LEUCHTMITTEL-BETRIEBSSCHALTUNG MIT GETAKTETEM KONVERTER ZUM DIGITALEN EINSTELLEN EINER FARBTEMPERATUR UND/ODER EINES DIMMPEGELS**

ILLUMINATING MEANS OPERATING CIRCUIT HAVING A CLOCKED CONVERTER FOR THE DIGITAL ADJUSTMENT OF A COLOR TEMPERATURE AND/OR A DIMMING LEVEL

CIRCUIT DE COMMANDE D'ÉLÉMENT LUMINESCENT COMPORTANT UN CONVERTISSEUR CADENCÉ POUR LE RÉGLAGE NUMÉRIQUE D'UNE TEMPÉRATURE DE COULEUR ET/OU D'UN NIVEAU DE VARIATION D'INTENSITÉ LUMINEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.10.2013 DE 102013222177**

(43) Veröffentlichungstag der Anmeldung:
**07.09.2016 Patentblatt 2016/36**

(73) Patentinhaber: **Tridonic GmbH & Co. KG**
**6851 Dornbirn (AT)**

(72) Erfinder:
• **KÜNG, Thomas**
**8772 Nidfurn (CH)**
• **REUMER, Andre**
**8752 Näfels (CH)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**DE-A1-102011 088 966      DE-A1-102012 007 478**
**DE-A1-102012 206 044      US-A1- 2005 201 524**
**US-A1- 2007 104 075**

**Beschreibung**

Die Erfindung betrifft eine Leuchtmittel-Betriebsschaltung zur Ansteuerung einer Leuchtmittel-Strecke und insbesondere einer LED-Strecke mit wenigstens einer LED. Die LED-Strecke wird dabei ausgehend von einem getakteten Konverter angesteuert, vorzugsweise von einem Buck-Konverter. Die Erfindung bezieht sich insbesondere auf die indirekte Ermittlung des Stroms ($I_{LED}$) durch die LED-Strecke zum Zwecke der Regelung des LED-Stroms.

Halbleiterlichtquellen wie beispielsweise Leuchtdioden sind während der letzten Jahre für Beleuchtungsanwendungen zunehmend interessant geworden. Der Grund dafür liegt unter anderem darin, dass entscheidende technische Innovationen und große Fortschritte sowohl bei der Helligkeit als auch bei der Lichteffizienz (Lichtleistung pro Watt) dieser Lichtquellen erzielt werden konnten. Nicht zuletzt durch die vergleichsweise lange Lebensdauer konnten sich Leuchtdioden zu einer attraktiven Alternative zu herkömmlichen Lichtquellen wie Glüh- oder Gasentladungslampen entwickeln.

Halbleiterlichtquellen sind aus dem Stand der Technik hinreichend bekannt und werden im Folgenden allgemein als "LED" (Light Emitting Diode) bezeichnet. Dieser Begriff soll im Folgenden sowohl Leuchtdioden aus anorganischen Materialien als auch Leuchtdioden aus organischen Materialien umfassen (OLED).

Es ist bekannt, dass die Lichtabstrahlung von LEDs mit dem Stromfluss durch die LEDs korreliert. Zur Helligkeitsregelung werden LEDs daher grundsätzlich in einem Modus betrieben, in dem der Strom durch die LED geregelt wird.

In der Praxis werden zur Ansteuerung einer Anordnung von einer LED oder mehreren LEDs vorzugsweise Schaltregler, beispielsweise Tiefsetzsteller (Step-Down- oder Buck-Konverter) verwendet. Ein derartiger Schaltregler ist beispielsweise aus der DE 10 2006 034 371 A1 bekannt. Dabei steuert eine Steuereinheit einen hochfrequent getakteten Schalter (beispielsweise einen Leistungtransistor, FET, MOSFET) an. Im eingeschalteten Zustand des Schalters fließt Strom über die LED Anordnung und eine Spule, die dadurch aufgeladen wird. Die zwischengespeicherte Energie der Spule entlädt sich im ausgeschalteten Zustand des Schalters über die LED(s) (Freilaufphase).

Das Dokument DE 10 2011 088 966 A1 zeigt eine Betriebsschaltung für Leuchtdioden und ein Verfahren zum Betrieb von Leuchtdioden. Dabei wird zur Regelung der Beleuchtungsstärke die Anodenspannung der LED-Strecke und ein direkt an der LED-Strecke gemessener Strom durch die LED-Strecke genutzt.

Das Dokument DE 2012 206 044 A1 zeigt eine Betriebsschaltung zum Betrieb von Leuchtdioden. Dabei werden als Regelungsgrößen eine Spannung über die LED-Strecke und ein Strom durch einen Konverter-Schalter genutzt.

Die Druckschrift DE 2012 007 478 A1 zeigt einen Wandler für Leuchtmittel und ein Verfahren zum Betreiben eines Wandlers. Dabei wird eine primärseitige Bus-Spannung mittels eines Kondensators gefiltert und gemessen.

Das Dokument US 2005/0201524 A1 zeigt ein Verfahren und eine Vorrichtung zur Kalibrierung von indirekten Messsystemen.

Das Dokument US 2007/0104075 A1 zeigt eine Treiberschaltung für Dioden in Kommunikationsgeräten. Dabei wird eine Spannung mittels eines Tiefpassfilters gemittelt.

Im Folgenden dargestellte Ausführungsbeispiele, welche nicht unter den Wortlaut der unabhängigen Ansprüche fallen, sind als hilfreiche Beispiele und nicht als Ausführungsbeispiele der Erfindung zu verstehen.

Gemäß einem Aspekt der vorliegenden Anmeldung soll nun mittels wenigstens zwei unterschiedlichen LED-Kanälen ein Dimmen eines Mehrkanal-Moduls hinsichtlich der Farbtemperatur wie auch der Gesamtintensität erfolgen. Ein LED-Kanal weist dabei wenigstens eine LED auf und wird durch ein Modul betrieben. Eine solche Betriebsschaltung kann auch als Mehrkanal-Betriebsschaltung ausgebildet sein, so dass durch ein Modul mehrere LED-Kanäle, insbesondere Kanäle, die Weißlicht-LEDs aufweisen, betrieben werden können.

Jeder Weißlicht-LED-Kanal ist vorzugsweise durch einen ihm zugeordneten Buck-Konverter versorgt, dessen Busspannung von einer Leistungsfaktorkorrekturschaltung (PFC) erzeugt wird. Somit wird durch ein Mehrkanal-Betriebsschaltung besonders ein warmer LED-Kanal, ein kalter LED-Kanal, und ggf. noch weitere Kanäle, versorgt, wobei der warme LED-Kanal LEDs aufweist, die ausschließlich oder vorwiegend mit einer wärmeren Farbtemperatur emittieren und wobei der kalte LED-Kanal LEDs aufweist, die ausschließlich oder vorwiegend mit einer kälteren Farbtemperatur emittieren als die LEDs des warmen LED-Kanals.

Für ein kombiniertes Einstellen einer Farbtemperatur bzw. einer Gesamtintensität (Dimmen) der von der Mehrkanal-Betriebsschaltung betriebenen LEDs ist nunmehr mittels reinem PWM-Dimmen (und vorzugsweise ohne Amplitudendimmen) dafür zu sorgen, dass sowohl die gewünschte Farbtemperatur durch das relative Verhältnis des Tastverhältnisse der beiden Kanäle warm/kalt, wie auch die gewünschte Gesamtintensität erzielt wird. Der Strom während der PWM-Impulse wird durch HF-Taktung des Konverters geregelt. Grundsätzlich ist auch die Amplitude für jeden Kanal einstellbar, dies wird indessen zur Kalibrzwecken verwendet, während bei der Farbtemperaturveränderung bzw. der Gesamtintensitätsveränderung die Amplitude vorzugsweise konstant gehalten wird. Über die Einstellung des Amplitudenpegels erfolgt eine sehr spezifische Anpassung der Mehrkanal-Betriebsschaltung (LED-Treiber) auf die konkret angeschlossene LED-Strecke, sodass ein sinnvoller Betrieb einer derart kalibrierten Mehrkanal-Betriebsschaltung meist nur mit der jeweiligen LED-Strecke möglich ist.

Eine weitere Variable ist, dass die LED-Strecke jedes Kanals eine unterschiedliche Anzahl von LEDs aufweisen kann, sodass die LED-Streckenspannung sehr variabel von beispielsweise wenigen Volt bis zu beispielsweise 350 Volt ist.

Die Erfindung stellt nun eine Betriebsschaltung, eine Leuchte mit der Betriebsschaltung und ein Verfahren gemäß der unabhängigen Ansprüche bereit, die es ermöglichen, indirekt zum Zwecke der Regelung des LED-Stroms die LED-Spannung zu ermitteln. Weiterbildungen der Erfindung sind Gegenstand der abhängigen Ansprüche.

In einem ersten Aspekt wird eine Betriebsschaltung bereitgestellt zur Versorgung wenigstens einer LED-Strecke mit wenigstens einer LED, wobei der Betriebsschaltung an wenigstens einem eingangsseitigen Anschluss eine elektrische Versorgung zuführbar ist, und die Betriebsschaltung wenigstens einen durch eine Steuereinheit getakteten ersten Schalter eines Konverters, vorzugsweise eines Buck-Konverters, aufweist, von dem ausgehend die wenigstens eine der LED-Strecke elektrisch versorgbar ist, wobei die Steuereinheit dazu eingerichtet ist, an einem Spanungsteiler der Betriebsschaltung einen die Anoden-Spannung der wenigstens einen LED-Strecke wiedergebenden ersten elektrischen Parameter zu ermitteln, und mittels einer Filterschaltung der Betriebsschaltung einen die Kathoden-Spannung wiedergebenden zweiten elektrischen Parameter zu ermitteln.

Die Filterschaltung kann ein Tiefpassfilter, vorzugsweise zweiter oder höherer Ordnung, oder ein Bandpassfilter sein.

Die Steuereinheit kann dazu eingerichtet sein, einen den Strom durch den Schalter widergebenden dritten elektrischen Parameter direkt oder indirekt an einem Mess-Widerstand der Betriebsschaltung zu ermitteln, wobei die Steuereinheit weiter dazu eingerichtet ist, die Spannung an der wenigstens einen LED-Strecke aus dem ersten und dem zweiten elektrischen Parameter und, unter Verwendung des dritten elektrischen Parameters, den Strom durch die wenigstens eine LED-Strecke als Istwert zu bestimmen, den Istwert mit einem Sollwert zu vergleichen und abhängig von dem Vergleich die Taktung des Schalters (S1) bspw. durch PWM-Modulation zu verändern.

Die Steuereinheit kann die Spannung an der wenigstens einen LED-Strecke als Differenz aus der Anoden-Spannung und der Kathoden-Spannung der LED-Strecke bestimmen, bzw. aus einer Differenz/Summe des ersten und des zweiten elektrischen Parameters.

Die Steuereinheit kann den LED-Strom bestimmen aus dem Produkt der Anoden-Spannung der LED-Strecke bzw. des ersten elektrischen Parameters und des Stroms durch den Schalter bzw. des dritten elektrischen Parameters dividiert durch die Spannung an der wenigstens einen LED-Strecke oder einen diese wiedergebenden elektrischen Parameter.

Die Steuereinheit kann den Strom durch den Schalter mitteln.

Der Strom durch die LED-Strecke kann der Steuereinheit als Rückführsignal, zugeführt werden. Die Steuereinheit kann die Einschaltzeitdauer des Schalters steuern.

Die Mittelung des Stroms durch den Schalter kann durch einen Tiefpassfilter erfolgen, der z.B. den zeitlichen Mittelwert des Stroms erfasst.

Das den Schalter ansteuernde erste PWM-Signal kann mit einem zweiten PWM-Signal kombiniert wird, wobei das zweite PWM-Signal im Verhältnis zur Frequenz ersten PWM-Signals niederfrequent ist.

Die Steuereinheit kann ein Tastverhältnis des ersten PWM-Signals steuern.

Die Steuereinheit kann den ermittelten Istwert des Stroms durch die LED-Strecke vor einem Vergleich mit dem Sollwert kalibrieren.

Die Kalibrierung kann die Abweichung des Stroms durch die wenigstens eine LED-Strecke, bzw. des Lichtstroms, von dem gemessenen Strom durch den Schalter kompensieren und z.B. Messfehler der indirekten Messung beseitigen.

Die Steuereinheit kann den durch die Kalibrierung kompensierten Istwert mit dem Sollwert für den Strom durch die LED-Strecke vergleichen und als Steuergröße zur Regelung des Stroms durch die LED-Strecke die hochfrequente Taktung des Schalters bzw. das erste PWM-Signal verändern.

Der Betriebsschaltung kann an wenigstens einem eingangsseitigen Anschluss eine, insbesondere veränderliche, elektrische Versorgung und/oder ein Dimmsignal zugeführt werden. Insbesondere kann ein Steuersignal vorgegeben werden, um eine Farbtemperatur einzustellen.

Die Steuereinheit kann alternativ oder zusätzlich zu dem Istwert den Sollwert kalibrieren. Die Kalibrierung kann vorzugsweise vor Inbetriebnahme der Betriebsschaltung erfolgen, insbesondere fertigungsseitig, d.h. besonders durch den Hersteller.

Die Steuereinheit kann auf der sich aus dem Vergleich von Istwert und Sollwert für den Strom durch die wenigstens eine LED-Strecke ergebenden Regeldifferenz einem Regelalgorithmus durchführen, dem ein Stellwert zur Ansteuerung des Schalters des Konverters zugeführt wird und davon abhängig das erste PWM-Signal verändern.

Mit jedem LED-Kanal kann wenigstens eine Weisslicht-LED verbindbar sein.

Die Betriebsschaltung kann an jedem LED-Kanal wenigstens eine Weisslicht-LED betreiben, und wobei die Weisslicht-LEDs an verschiedenen LED-Kanälen verschiedene Farbtemperaturen aufweisen. Jeder LED-Kanal kann durch einen separaten Konverter versorgt sein.

Die Steuereinheit kann den getakteten Schalter des jeweiligen Konverters abhängig von einem Steuersignal einstellen, um eine Farbtemperatur einzustellen, die zwischen den Farbtemperaturen der verschiedenen LED-Kanäle liegt. Diese einzustellende Farbtemperatur kann durch das Steuersignal vorgegeben sein.

In einem weiteren Aspekt wird eine Leuchte bereitgestellt mit einer LED-Strecke mit wenigstens einer LED und einer Betriebsschaltung , wie es vorstehend beschrieben ist.

In noch einem weiteren Aspekt wird eine Verfahren bereitgestellt zum Betreiben wenigstens eines LED-Kanals durch eine Betriebsschaltung zur Versorgung jeweils wenigstens einer LED-Strecke mit wenigstens einer LED, wobei der Betriebsschaltung an wenigstens einem eingangsseitigen Anschluss eine Versorgungsspannung zugeführt wird, und wobei die Betriebsschaltung wenigstens einen durch eine Steuereinheit getakteten ersten Schalter eines Konverters, vorzugsweise eines Buck-Konverters, aufweist, von dem ausgehend wenigstens eine der LED-Strecken elektrisch versorgbar ist, wobei die Steuereinheit an einem ersten Spanungsteiler der Betriebsschaltung einen die Anoden-Spannung der wenigstens einen LED-Strecke wiedergebenden ersten elektrischen Parameter ermittelt, und an einer Filterschaltung, vorzugsweise zweiter Ordnung, der Betriebsschaltung einen die Kathoden-Spannung wiedergebenden zweiten elektrischen Parameter ermittelt.

Die Steuereinheit kann weiter einen den Strom durch den Schalter widergebenden dritten elektrischen Parameter direkt oder indirekt an einem Mess-Widerstand der Betriebsschaltung ermitteln, wobei die Steuereinheit weiter die Spannung an der wenigstens einen LED-Strecke aus dem ersten und zweiten elektrischen Parameter und, unter Verwendung des dritten elektrischen Parameters, den Strom durch die wenigstens eine LED-Strecke als Istwert bestimmen, den Istwert mit einem Sollwert vergleichen und abhängig von dem Vergleich die Taktung des Schalters bspw. durch PWM-Modulation zu verändern.

Die Erfindung wird nunmehr auch mit Bezug auf die Zeichnungen beschrieben. Dabei zeigen:

Fig. 1    eine Schaltungsanordnung gemäß der Erfindung.

Fig. 2    exemplarisch einige Stromverläufe in der Schaltungsanordnung.

Fig. 3    eine schematische Schaltungsanordnung gemäß einer Weiterbildung der Erfindung.

Fig. 4    eine exemplarische Ausgestaltung der Schaltungsanordnung aus Fig. 3.

Fig. 5    exemplarisch einen Zusammenhang von für eine Kalibrierung zumindest teilweise verwendeten Größen.

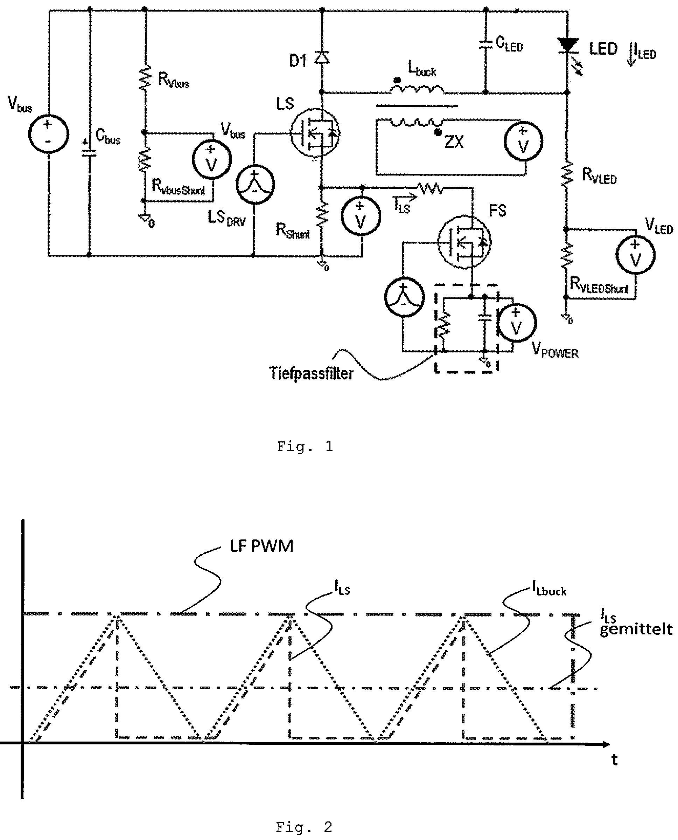

In Fig. 1 zeigt eine Schaltungsanordnung - unter anderem - einen Tiefsetzsteller (Buck-Converter) für den Betrieb zumindest der LED-Strecke (mit einer oder mehreren in Serie geschalteten LEDs), mit einem ersten Schalter LS, der auch als Konverter-Schalter des Buck-Konverters bezeichnet werden kann. Die Schaltungsanordnung, im Folgenden auch als Betriebsschaltung bezeichnet, wird mit einer Gleichspannung bzw. einer gleichgerichteten Wechselspannung $V_{bus}$ versorgt.

Parallel zu der Versorgungsspannung $V_{bus}$ ist ein Kondensator $C_{bus}$ angeordnet. Ein erster Mess-Widerstand $R_{VbusShunt}$ ist über einen ersten Widerstand $R_{Vbus}$ mit der Versorgungsspannung $V_{bus}$ verbunden. An diesem ersten Mess-Widerstand $R_{VbusShunt}$ kann die Versorgungsspannung $V_{bus}$ von einer Steuereinheit SE (z.B. einem Mikrocontroller, einer ASIC, einer IC, ...) (nicht gezeigt) erfasst werden.

Es schließt sich der eigentliche Konverter an, wobei zunächst eine Diode D1, der erste Schalter LS und ein zweiter Mess-Widerstand $R_{Shunt}$ in Serie parallel zum Kondensator $C_{bus}$ verschaltet sind. Zwischen Diode D1 und dem ersten Schalter LS ist die potentialniedrigere Seite der Diode D1 über eine Spule $L_{buck}$ mit einem zu der Diode D1 parallelgeschalteten zweiten Kondensator $C_{LED}$ verbunden. An dem zweiten Mess-Widerstand $R_{Shunt}$ kann, z.B. von der Steuereinheit SE, der Schalter-Strom $I_{LS}$ durch den ersten Schalter LS erfasst werden.

Parallel zu dem zweiten Kondensator $C_{LED}$ ist schließlich die LED-Strecke LED geschaltet.

Im eingeschalteten Zustand des ersten Schalters LS (während der Einschaltzeitdauer $T_{on}$) wird in der Spule $L_{buck}$ Energie aufgebaut, die sich im ausgeschalteten Zustand des ersten Schalters LS (Zeitdauer $T_{off}$) über die LED-Strecke LED entlädt. Induktiv mit der Spule $L_{buck}$ ist eine Drossel ZX gekoppelt, über die in einem Messkreis die Lade- und Entlade-Vorgänge (Magnetisierung und Entmagnetisierung) der Spule $L_{buck}$ erfasst werden können. Insbesondere können über die Drossel ZX Nulldurchgänge, d.h. eine Entladung der Spule $L_{buck}$ auf den NullPegel, erfasst werden. Dies kann z.B. durch die Steuereinheit SE erfolgen, indem z.B. der Strom $I_{Lbuck}$ durch die Spule, z.B. an der Drossel ZX erfasst wird.

In Serie zu dem Leuchtmittel ist über einen weiteren Widerstand $R_{VLED}$ ein dritter Mess-Widerstand $R_{VLEDShunt}$ angeschlossen, an dem eine Mess-Spannung $V_{LED}$ von der Steuereinheit SE erfasst werden kann.

Zurück an dem ersten Schalter LS ist an dessen potentialniedrigere Seite zwischen dem ersten Schalter LS und dem zweiten Mess-Widerstand $R_{Shunt}$ über einen weiteren Widerstand ein zweiter Schalter FS verschaltet, über den ein Filter 1. Ordnung (Tiefpass) zu- oder abgeschaltet werden kann.

Der erste Schalter wird dabei über eine Treiberschaltung $LS_{Driver}$ mit einer Treiberspannung $V_{gate}$ angesteuert, während der zweite Schalter FS über eine Treiberschaltung mit der Spannung $V_{duty}$ angesteuert wird. Die jeweilige Ansteuerung kann auch durch eine Steuerschaltung SE erfolgen.

Das Tiefpassfilter dient nun dazu, den an dem zweiten Mess-Widerstand $R_{Shunt}$ erfassten Schalter-Strom $I_{LS}$ zeitlich zu mitteln. Die Erfindung sieht nämlich zur Messung des LED-Stroms $I_{LED}$ als Istwert folgendes vor: Der Schalter-Strom $I_{LS}$ durch den ersten Schalter LS wird bei eingeschaltetem ersten Schalter LS an dem zweiten Mess-Widerstand $R_{Shunt}$ erfasst. Dieser Strom steigt während der Einschaltzeitphase des ersten Schalters LS im Wesentlichen linear an und fällt beim Öffnen des Schalters LS auf null ab. Der Strom durch die Spule $L_{buck}$ zeigt also einen zickzackförmigen zeitlichen Verlauf: bei eingeschaltetem ersten Schalter zeigt der Strom eine ansteigende Flanke, bei ausgeschaltetem ersten Schalter ergibt sich eine abfallende Flanke. Während der Freilaufphase ist der Schalter-Strom $I_{LS}$ daher Null, bevor er beim erneuten Einschalten des ersten Schalters LS wieder ansteigt.

Vorzugsweise wird der Schalter LS ausgeschaltet, wenn eine Abschaltschwelle (abgelegt beispielsweise in der Steuereinheit SE) erreicht ist. Dieser Schalter-Stromverlauf $I_{LS}$ wird nunmehr gemittelt, indem er der Tiefpassschaltung zugeführt wird. Somit wird der sich im zeitlichen Mittel einstellende Schalter-Strom $I_{LS}$ erfasst.

Der hochfrequente, näherungsweise zickzackförmige Verlauf des LED-Stroms $I_{LED}$ (im Ausführungsbeispiel fällt der LED-Strom $I_{LED}$ durch die Spule $L_{buck}$ auf Null ab, bevor wieder eingeschaltet wird, was einem Betrieb im sog. "Borderline Mode" entspricht) kann kombiniert werden mit einer im Verhältnis dazu niederfrequenteren PWM-Ansteuerung (LF PWM, low-frequent PWM).

Eine große Schwankungsbreite des Stroms (Welligkeit oder Rippel) kann sich nämlich bei LEDs nachteilig auswirken, da mit Veränderung der Stromamplitude sich das Spektrum des emittierten Lichts verändern kann. Um das emittierte Lichtspektrum während des Betriebs möglichst konstant zu halten, ist es bekannt, bei LEDs für Helligkeitsregelungen nicht die Stromamplitude zu variieren, sondern alternativ oder zusätzlich ein Pulsmodulationsverfahren, beispielsweise das PWM (Pulse- Width Modulation)-Verfahren, anzuwenden.

Dabei werden den LEDs durch die Betriebsschaltung niederfrequente (typischerweise mit einer Frequenz im Bereich von 100-1000 Hz) Pulspakete mit (im zeitlichen Mittel) konstanter Stromamplitude zugeführt. Dem Strom innerhalb eines Pulspakets ist der oben angeführte hochfrequente Rippel überlagert. Die Helligkeit der LEDs kann nun durch die Frequenz der Pulspakete gesteuert werden; die LEDs können beispielsweise gedimmt werden, indem der zeitliche Abstand zwischen den Pulspaketen vergrößert wird. Es wird somit also die hochfrequente Taktung des ersten Schalters LS mit einem PWM-Signal kombiniert, wobei die Frequenz des PWM-Signals im Verhältnis zur Frequenz der hochfrequenten Taktung des ersten Schalters (LS) niederfrequent ist. Es ergibt sich dadurch eine hochfrequente Taktung des ersten Schalters LS, welche von längeren Pausen ohne Taktung unterbrochen wird, wobei diese längeren Pausen die Ausschaltphase des niederfrequenten PWM-Signals sind. Vorzugsweise sind die Frequenz der hochfrequenten Taktung und des niederfrequenten PWM-Signals aufeinander abgestimmt, um Flackereffekte zu vermeiden. Beispielsweise kann die Frequenz der hochfrequenten Taktung ein ganzzahliges Vielfaches der Frequenz des niederfrequenten PWM-Signals sein. Aus Gründen der Farbkonstanz soll innerhalb eines Pulspakets die Amplitude des Rippels möglichst gering sein. Dabei kann der Schalter in einem hochfrequenten PWM-Modus betrieben werden. In diesem Fall wird bei fix vorgegebener Frequenz das Einschaltverhältnis für die hochfrequente Taktung des ersten Schalters abhängig vom Mittelwert des ermittelten LED-Stromes oder Schalterstomes eingestellt. Eine Aufrechterhaltung des Stromes durch die LED kann durch die Parallelschaltung eines Kondensators $C_{LED}$ erfolgen, wie dies später noch erläutert wird. Alternativ kann die Einstellung des Stromes durch die LED durch geeignete Wahl des Einschaltzeitpunkts und Ausschaltzeitpunkts erfolgen. So können diese Zeitpunkte beispielsweise so gewählt werden, dass der erste Schalter LS eingeschaltet wird, wenn der Strom einen bestimmten minimalen Referenzwert unterschreitet und der Schalter ausgeschaltet wird, wenn der Strom einen maximalen Referenzwert überschreitet (Abschaltschwellwert). Der minimale Referenzwert kann auch Null sein.

Daher ist vorgesehen, dass der Strompfad zwischen dem zweiten Mess-Widerstand $R_{Shunt}$ in Serie zu dem ersten Schalter LS, dem Konverter-Schalter, hin zu dem Tiefpassfilter nur während der Einschaltzeitdauer des Niederfrequenten PWM-Signals freigegeben ist. Während der Ausschaltzeitdauer des Niederfrequenten PWM-Signals wird der Strompfad unterbrochen, so dass das sich einstellende tiefpassgefilterte (gemittelte) Signal gehalten wird und somit auch eine Auswertung des Mittelwertes in der Ausschaltzeitdauer des niederfrequenten PWM-Signals durch die Steuereinheit erfolgen kann.

Der LED-Strom $I_{LED}$ wird dann letztendlich gemäß der Erfindung ermittelt durch Inbezugsetzen (bspw. Dividieren oder anderes Korrelieren) der durch den Konverter übertragenen Leistung durch die LED-Spannung. Die übertragene Leistung wird dabei berechnet durch die am ersten Mess-Widerstand ermittelte Versorgungsspannung $V_{bus}$, die multipliziert wird mit dem zeitlich gemittelten Schalter-Strom $I_{LS}$. Dies kann z.B. wiederum durch die Steuereinheit SE erfolgen. Die LED-Spannung wird an dem dritten Mess-Widerstand $R_{VLEDShunt}$ ermittelt, der in Serie zu der LED-Strecke LED geschaltet ist. Die LED-Spannung ergibt sich dabei aus der Differenz zwischen der Versorgungsspannung $V_{bus}$ und der am dritten Mess-Widerstand ermittelten Mess-Spannung $V_{LED}$.

Somit wird indirekt der LED-Strom $I_{LED}$ durch Berechnung der übertragenen Leistung und der indirekten Ermittlung der LED-Spannung ermittelt. Die Ermittlungen und/oder die Berechnungen erfolgen dabei vorzugsweise durch die Steuereinheit SE.

Der berechnete LED-Strom kann somit als Istwertgröße für eine Regelung des LED-Stroms verwendet werden. Als Steuergröße für die Regelung kann einerseits die Einschaltzeitdauer $T_{on}$ des ersten Schalters LS des (Buck-)Konverters verwendet werden. Alternativ oder zusätzlich kann das Tastverhältnis der niederfrequenten PWM-Ansteuerung, falls vorhanden, verwendet werden.

Ist die Steuergröße die Einschaltzeitdauer $T_{on}$ des Konverters, kann die Abschaltschwelle für den ersten Schalter LS in der Steuereinheit abhängig von dem Mittelwert des Schalter-Stroms $I_{LS}$ verschoben werden.

Der Steuereinheit werden vorzugsweise also ein Signal, das die Versorgungsspannung $V_{bus}$ wiedergibt, ein Signal, das den zeitlichen Mittelwert des Schalter-Stroms $I_{LS}$ wiedergibt (in den Einschaltzeitdauern der niederfrequenten PWM-Modulation, falls vorhanden), und/oder ein Signal, das die Versorgungsspannung $V_{bus}$ minus die am dritten Mess-Widerstand $R_{VLEDSchunt}$ ermittelte Spannung $V_{LED}$ wiedergibt, zugeführt.

Auch neben der Ansteuerung des ersten Schalters LS kann die Steuereinheit im Übrigen auch selektiv den Tiefpassfilter über Ansteuerung des zweiten Schalters FS freigeben (z.B. während der Einschaltzeitdauer des PWM-Signals) bzw. abtrennen (z.B. während der Ausschaltzeitdauer des PWM-Signals), d.h. des Pfads zwischen dem zweiten Mess-Widerstand $R_{Shunt}$ dem ersten Schalter LS und dem Tiefpassfilter.

Der Kondensator $C_{LED}$ parallel zur LED-Strecke LED ist als solcher bekannt und dient dazu, zu vermeiden, dass der LED-Strom identisch den Verlauf durch die Spule $L_{buck}$ nachvollzieht. Bei nichtleitfähig-geschalteten ersten Schalter LS, insbesondere während der Phase der Entmagnetisierung der Spule $L_{Buck}$, kann der Strom durch die LED aufgrund der in dem Kondensator $C_{LED}$ zwischengespeicherten Energie aufrecht erhalten werden. Bekanntlich ist es hinsichtlich des Spektrums der LED-Strecke LED nachteilig, wenn der LED-Strom derart große Hübe ausführt (außer bei einer reinen PWM-Ansteuerung zwischen 0 und 1) .

Das niederfrequente PWM-Signal muss nicht von der Steuereinheit selbst erzeugt werden, vielmehr kann es von außerhalb zugeführt werden und kann dann natürlich auch dem Freigabe/Abtrennelement, dem zweiten Schalter FS, für den Tiefpassfilter zugeführt werden.

Gemäß einer bevorzugten Ausführungsform kann das Freigabe-/Abtrennfenster für das Verbindungselement, der zweite Schalter FS, zwischen Tiefpassfilter und dem zweiten Mess-Widerstand $R_{Shunt}$ von einem PWM-Einschaltimpuls dahingehend abweichen, dass das "Abtrennen" erst erfolgt, wenn ein Nulldurchgang bzw. das Abfallen des Stroms durch die Spule $L_{buck}$ auf null erfasst wird. Dies kann über die Drossel ZX, z.B. über einen Pin an der Drossel, durch die Steuereinheit SE erfolgen. Somit wird sichergestellt, dass das Mittelungsfenster für die Tiefpassschaltung immer vollständige dreieckförmige Verläufe des Spulenstroms abdeckt.

Es ist auch zu bemerken, dass die Spule $L_{buck}$ auch zwischen dem zweiten Kondensator $C_{LED}$ und der LED-Strecke LED angeordnet sein kann.

Fig. 2 zeigt exemplarisch den Strom $I_{LS}$ durch den ersten Schalter LS, den gemittelten Strom $I_{LS}$, der durch den Tiefpassfilter ermittelt wird, den Stromverlauf $I_{Lbuck}$ an der Spule $L_{buck}$ und ein niederfrequentes PWM-Signal LF PWM.

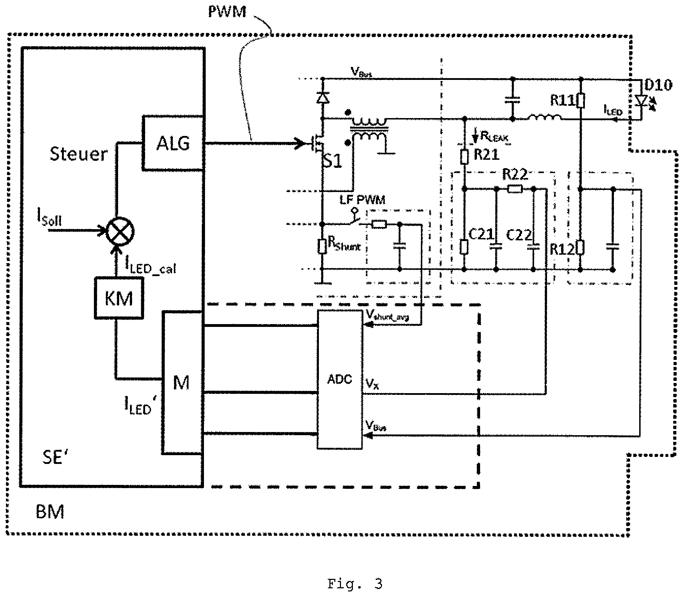

Mit Blick auf die Fig. 3 wird nunmehr eine Weiterbildung der Erfindung mit ihrem Regelprinzip erläutert: Über einen Spannungsteiler R11, R12 wird die auf der Anode der LED-Strecke, exemplarisch als LED D10 dargestellt, anliegende Busspannung $V_{Bus}$' gemessen. Um die Spannung an der LED D10 messen zu können, ist gemäß der Erfindung eine Filterschaltung vorzugsweise zweiter Ordnung vorgesehen mit zwei Kondensatoren C21, C22 und zwei Widerständen R21, R22.

Die LED-Spannung wird nun ermittelt als die Differenz zwischen der gemessenen Busspannung $V_{Bus}$' und der über die Filterschaltung C21, C22, R21, R22 erfassten Spannung Vx. Weiterhin wird der Strom durch den getakteten Schalters S1, hier des Buck-Konverters, gemessen bzw. abgetastet. Als weitere Größe ist die Taktung der Schaltung des Buck-Konverters bekannt.

Aus diesen Messgrößen (Schalterstrom und LED-Spannung) lässt sich nunmehr der LED-Strom $I_{LED}$' bestimmen, der den eigentlich zu regelnden Wert darstellt. Der zu regelnde LED-Strom $I_{LED}$' wird nicht direkt gemessen, sondern indirekt aus diesen Größen ermittelt.

Für die Regelung wird also der zeitlich gemittelte Strom über den Konverterschalter S1, die gefilterte Katoden-Spannung Vx der LED-Strecke D10 sowie die über den Widerstandteiler R11, R12 erfasste Anoden-Spannung $V_{Bus}$' von einer Steuereinheit SE' erfasst.

Aus diesen Messwerten ermittelt die Steuereinheit SE' den LED-Strom $I_{LED}$'. In einem Auswertungsmodul M werden die drei Messwerte erfasst und der LED-Strom $I_{LED}$' wird mit einem Sollwert $I_{soll}$ verglichen, wobei der ermittelte Istwert des LED-Stroms $I_{LED}$' zuvor noch einer spezifischen Kalibrierung durch ein Kalibrierungsmodul KM unterzogen wird. Die Kalibrierung kompensiert eine Abweichung des LED-Stroms $I_{LED}$' (bzw. des Lichtstroms) von dem gemessenen Schalterstrom und beseitigt somit einen systematischen Messfehler der indirekten Messung.

Der durch die Kalibrierung kompensierte Istwert $I_{LED\_cal}$ des LED-Stroms wird dann mit dem Sollwert $I_{Soll}$ für den LED-Strom verglichen. Als Steuergröße "Steuer" wird dann zur Regelung des LED-Stroms mittels einer Ansteuerschaltung bzw. basierend auf einem Ansteueralgorithmus ALG eine hochfrequente Taktung des Schalters bspw. eine PWM-Modulation verwendet. Hier kann z.B. auf Basis einer Nachschlagetabelle (Look-Up-Table) und/oder als von der Stellgröße abhängige Funktion eine PWM- Modulation des Schalters S1 eingestellt werden. Zum Dimmen wird diese hochfrequente PWM-Modulation des Schalters S1 noch durch ein niederfrequentes zweites PWM Signal moduliert/überlagert.

Die Ausgangssignale des ADCs (Analog-Digital-Wandler) werden also einer Steuereinheit SE' zugeführt, die aus diesen drei Eingangsgrößen den Istwert für den LED-Strom $I_{LED}$ ermittelt. Der ADC kann in der Steuereinheit SE' integriert sein oder separat davon vorgesehen sein.

Der Istwert (alternativ auch der Sollwert) wird einem Kalibrierungskompensationsmodul KM zur Kompensation systematischer Messfehler zugeführt. Diese Kalibrierung kann vor Inbetriebnahme der Schaltung durchgeführt werden, insbesondere fertigungsseitig.

Der (kompensierte) Istwert $I_{LED\_cal}$ wird verglichen mit einem Sollwert $I_{Soll}$ für den LED-Strom $I_{LED}$'. Die sich ergebende Regeldifferenz wird einem Regelalgorithmus ALG unterzogen, der dann einen Steuerwert zur Ansteuerung eines Schalters S1 des Konverters ermittelt und den Schalter S1 entsprechend ansteuert.

Wenn ein Dimmen zusätzlich zur Regelung des LED-Stroms $I_{LED}$' ausgeführt werden soll, erfolgt dies, wie gesagt, dadurch, dass die hochfrequente PWM-Modulation zur Ansteuerung des Konverterschalters S1 noch mit einer niederfrequenten PWM-Modulation überlagert ist.

Die Steuerschaltung SE' kann dabei zumindest teilweise als integrierte Schaltung (IC, ASIC) und/oder als Mikrocontroller ($\mu$C) ausgestaltet sein. Insbesondere der Regelalgorithmus kann durch eine integrierte Schaltung und/oder einen Mikrocontroller ausgeführt werden.

Soll z.B. eine Farbtemperatur, insbesondere durch eine Mehrkanal-Betriebsschaltung BM eingestellt werden, das z.B. einen warmen und einen kalten Weisslicht-Kanal aufweist, so erlaubt die Erfindung ein Einstellen der Farbtemperatur mit lediglich einer geringen Abweichung (ca. +/-1%) über den gesamten Dimmbereich von 100% bis ca 0.5% Dimmen.

Es werden daher vorzugsweise drei oder mehr Messungen auf einer Dimmkurve durchgeführt, um einen Kompensationswert (correction offset, $k_{OS}$) zu bestimmen. Dies erfolgt insbesondere durch eine Interpolation zwischen den Messpunkten.

Ein rein digitales Dimmen, wie es die Erfindung erlaubt, ist insofern vorteilhaft, als dass eine Farbverschiebung während des Dimmens vermieden wird. Das Abtastschema des ADC kann daher entsprechend angepasst werden. Insbesondere kann ein sehr kurzer Arbeitszyklus (duty cycle) gewählt werden.

Ein Filter erster Ordnung, bestehend aus dem Widerstand R21 und der Kapazität C21 wird dabei verwendet, um die gefilterte Kathoden-Spannung Vx zu messen (welche einer Differenz aus der Busspannung $V_{Bus}$' und der LED-Spannung $V_{LED}$ entspricht ($V_{Bus}$'-$V_{LED}$')).

Um das Einschaltzeitdauer-/Ausschaltzeitdauer-Verhältnis des Schalters S1 (FET, MOSFET) zu bestimmen, wird an einem Messwiderstand (Shunt) $R_{Shunt}$ der Strom während der Einschaltzeitdauer des Schalters S1 gemessen. Bei Kenntnis des Verhältnisses kann der Gesamtstrom bestimmt werden als

$$I_{LED'} = I_{Shunt} * V_{Bus'} / V_{LED'}$$

Ein Filter zweiter Ordnung R22, C22 stellt eine Dämpfung bereit, die ausreicht, um die benötigte Genauigkeit zu erreichen, so dass ein hochfrequenter Rippel der gefilterten Kathoden-Spannung Vx der LED-Strecke D10 eine Mittelung/Mittel-/Durchschnittswertbildung der Kathoden-Spannung Vx nicht beeinflusst. Hierbei beeinflusst die Ausgestaltung des Filters zweiter Ordnung R22, C22 jedoch die Einschwingzeit nicht signifikant. Insbesondere beträgt die Einschwingzeit ca. 20 $\mu$s oder weniger, um ein gültiges Signal bereits während des ersten Abtastens zu erzeugen.

Die beschriebene Kompensation und Kalibrierung erlaubt es zudem, die hohen Ansprüche an die Genauigkeit zu erfüllen.

Bei kurzen Einschaltdauern des Schalters S1 und bei geringem Dimmpegel wird somit die Messung der Spannung $V_{LED}$' durch den Filter zweiter Ordnung verbessert. Das Abtastschema des ADCs sichert ein richtiges Messen bei sehr kurzen PWM-Arbeitszyklen. Um ein richtiges Messen von $I_{LED}$' und $V_{LED}$' zu ermöglichen, wird die minimale Einschaltzeitdauer (t-on) bspw. auf einem Dimmpegel von ca. 2% begrenzt. Unter diesem Schwellenwert wird die Ausschaltzeitdauer (t-off) erhöht um den zum digitalen Dimmen benötigten Arbeitszyklus zu erzeugen.

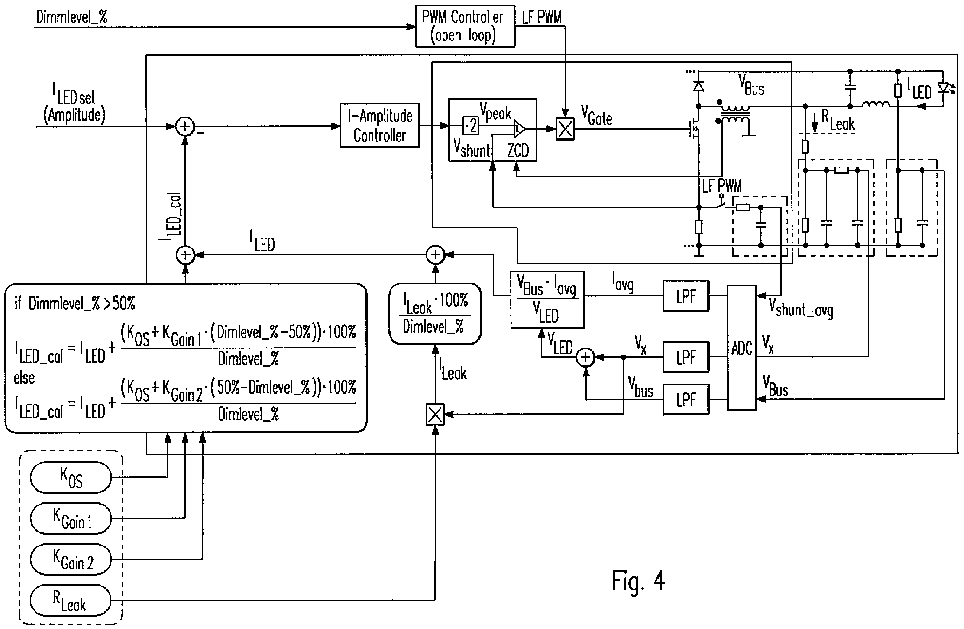

Fig. 4 zeigt eine detailliertere exemplarische Ansicht der Betriebsschaltung BM. Hier ist gezeigt, dass die an dem ADC zugeführten elektrischen Parameter nach einer Analog-DigitalWandlung gefiltert werden, z.B. durch IIR-Tiefpassfilter. Dadurch werden elektrische Parameter erzeugt, die dem an dem Schalter S1 erfassten gemittelten Strom $I_{avg}$ entsprechen, der gefilterten Kathoden-Spannung Vx, sowie der Anoden-Spannung $V_{Bus}$'.

Die an der LED-Strecke D10 anliegende Spannung $V_{LED}$' wird durch Differenzbildung bestimmt, welche wiederum zur Bestimmung des Stroms $I_{LED}'$ durch die LED-Strecke D10 verwendet wird. Insbesondere ergibt sich der Strom $I_{LED}'$ durch die LED-Strecke D10 aus einem Produkt der Anoden-Spannung $V_{Bus}'$ und des gemittelten Stroms $I_{avg}$, der durch die bestimmte an der LED-Strecke D10 anliegende Spannung $V_{LED'}$ geteilt wird.

Zudem wird zur Bestimmung des Stroms $I_{LED}'$ durch die LED-Strecke D10 der Leckstrom $I_{LEAK}$ mit einbezogen, der mit dem Leck-Widerstand $R_{LEAK}$ korreliert. Hier wird auch der Dimmpegel miteinbezogen. Anschließend erfolgt die Kalibrierung des Stroms $I_{LED}'$ durch die LED-Strecke D10 anhand der Kalibrierungsparameter, z.B. $k_{OS}$, $k_{Gain1}$ und $k_{Gain2}$, abhängig vom Dimmpegel (Dimmlevel).

Im gezeigten Beispiel erfolgt die Kalibrierung wie folgt:

- Bei einem Dimmpegel von größer 50% bestimmt sich der kalibrierte Strom $I_{LED\_cal}$ als:

$$I_{LED\_cal} = I_{LED} + \frac{\left(k_{OS} + k_{Gain1} \cdot \left(Dimlevel\_\% - 50\%\right)\right) \cdot 100\%}{Dimlevel\_\%}$$

- Sonst bestimmt sich der kalibrierte Strom $I_{LED\_cal}$ nach:

$$I_{LED\_cal} = I_{LED} + \frac{\left(k_{OS} + k_{Gain2} \cdot \left(50\% - Dimlevel\_\%\right)\right) \cdot 100\%}{Dimlevel\_\%}$$

Der kalibrierte Strom $I_{LED\_cal}$ wird dann mit dem Sollwert für den Strom durch die LED-Strecke verglichen, um die hochfrequente PWM-Taktung des Schalters S1, bspw. durch PWM-Modulation, insbesondere auch abhängig von einem niederfrequenten PWM-Signal, das den Dimmpegel vorgibt, einzustellen.

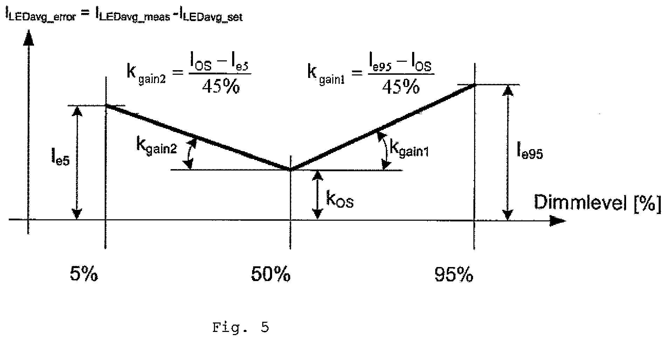

Fig. 5 zeigt schematisch Zusammenhänge zwischen den Kalibrierungsparametern $k_{OS}$, $k_{Gain1}$ und $k_{Gain2}$ und dem Dimmpegel sowie verschiedenen Stromwerten $I_{e5}$ und $I_{e95}$.

**Patentansprüche**

1. Betriebsschaltung zur Versorgung wenigstens einer LED-Strecke (D10) mit wenigstens einer LED, wobei die Betriebsschaltung eine Steuereinheit (SE') und einen Konverter, vorzugsweise einen Buck-Konverter, aufweist,

   - wobei der Betriebsschaltung an wenigstens einem eingangsseitigen Anschluss eine elektrische Versorgung zuführbar ist, und die Betriebsschaltung wenigstens einen durch die Steuereinheit (SE') getakteten ersten Schalter (S1) des Konverters aufweist, ausgehend von dem die wenigstens eine LED-Strecke (D10) elektrisch versorgbar ist,
   - wobei die Steuereinheit (SE') dazu eingerichtet ist, an einem ersten Spannungsteiler (R11, R12) der Betriebsschaltung einen die Anoden-Spannung ($V_{Bus}'$) der wenigstens einen LED-Strecke wiedergebenden ersten elektrischen Parameter zu ermitteln,
   - wobei die Steuereinheit (SE') dazu eingerichtet ist, einen den Strom durch den Schalter (S1) wiedergebenden dritten elektrischen Parameter direkt oder indirekt an einem Mess-Widerstand (Rshunt) der Betriebsschaltung zu ermitteln, unter Verwendung des dritten elektrischen Parameters den LED-Strom ($I_{LED}'$) durch die wenigstens eine LED-Strecke (D10) als Istwert zu bestimmen, den Istwert mit einem Sollwert (Isoll) zu vergleichen und abhängig von dem Vergleich eine hochfrequente Taktung des Schalters (S1) bspw. durch PWM-Modulation zu verändern,

   **dadurch gekennzeichnet, dass**

   - die Steuereinheit (SE') weiter dazu eingerichtet ist, mittels einer Filterschaltung (R22, C22) der Betriebsschaltung einen die Kathoden-Spannung (Vx) der wenigstens einen LED-Strecke wiedergebenden zweiten elektrischen Parameter zu ermitteln, wobei die Filterschaltung ein vorzugsweise analoges Tiefpassfilter zweiter oder höherer Ordnung oder ein Bandpassfilter ist,
   - die Steuereinheit (SE') weiter dazu eingerichtet ist, die Spannung an der wenigstens einen LED-Strecke ($V_{LED}'$) aus dem ersten und dem zweiten elektrischen Parameter zu bestimmen,
   - die Steuereinheit (SE') weiter dazu eingerichtet ist, den LED-Strom ($I_{LED}'$) zu bestimmen aus dem Produkt des ersten elektrischen Parameters und des dritten elektrischen Parameters dividiert durch die Spannung ($V_{LED}$') an der wenigstens einen LED-Strecke.

2. Betriebsschaltung nach Anspruch 1, wobei die Steuereinheit (SE') dazu eingerichtet ist, die Spannung ($V_{LED}$') an der wenigstens einen LED-Strecke (D10) als Differenz des ersten und des zweiten elektrischen Parameters zu bestimmen.

3. Betriebsschaltung nach einem der vorigen Ansprüche, wobei die Steuereinheit (SE') dazu eingerichtet ist, den Strom durch den Schalter (S1) zu mitteln.

4. Betriebsschaltung nach einem der vorigen Ansprüche, wobei die Betriebsschaltung ausgebildet ist, um den Strom ($I_{LED}$') durch die LED-Strecke (D10) der Steuereinheit (SE') als Rückführsignal zuzuführen, und wobei die Steuereinheit (SE') dazu eingerichtet ist, die Einschaltzeitdauer des Schalters (S1) zu steuern.

5. Betriebsschaltung nach Anspruch 3, wobei die Steuerheinheit (SE') einen Tiefpassfilter zum Mitteln des Stroms durch den Schalter (S1) aufweist, wobei der Tiefpassfilter ausgebildet ist, um einen zeitlichen Mittelwert des Stroms durch den Schalter (S1) zu erfassen.

6. Betriebsschaltung nach einem der vorigen Ansprüche, wobei die Betriebsschaltung ausgebildet ist, um ein den Schalter (S1) ansteuerndes erstes PWM-Signal mit einem zweiten PWM-Signal zu kombinieren, wobei das zweite PWM-Signal im Verhältnis zur Frequenz des ersten PWM-Signals niederfrequent ist.

7. Betriebsschaltung nach Anspruch 6, wobei die Steuereinheit (SE') ausgebildet ist, um ein Tastverhältnis des ersten PWM-Signals zu steuern.

8. Betriebsschaltung nach Anspruch 6 oder 7, wobei die Steuereinheit (SE') dazu eingerichtet ist, den ermittelten Istwert des Stroms durch die LED-Strecke (D10) vor einem Vergleich mit dem Sollwert ($I_{Soll}$) zu kalibrieren.

9. Betriebsschaltung nach Anspruch 8, wobei die Kalibrierung die Abweichung des Stroms durch die wenigstens eine LED-Strecke, bzw. des Lichtstroms, von dem gemessenen Strom durch den Schalter (S1) kompensiert und Messfehler der indirekten Messung beseitigt.

10. Betriebsschaltung nach Anspruch 9, wobei die Steuereinheit (SE') dazu eingerichtet ist, den durch die Kalibrierung kompensierten Istwert mit dem Sollwert für den Strom durch die LED-Strecke (D10) zu verglichen und als Steuergröße zur Regelung des Stroms durch die LED-Strecke (10) die hochfrequente Taktung des Schalters (S1) bzw. das erste PWM-Signal zu verändern.

11. Betriebsschaltung nach einem der Ansprüche 6, 7 und 10, wobei die Steuereinheit (SE') dazu eingerichtet ist, auf der sich aus dem Vergleich von Istwert und Sollwert für den Strom durch die wenigstens eine LED-Strecke ergebenden Regeldifferenz einen Regelalgorithmus durchzuführen, dem ein Stellwert zur Ansteuerung des Schalters (S1) des Konverters zugeführt wird, und davon abhängig das erste PWM-Signal zu verändern.

12. Leuchte mit einer LED-Strecke mit wenigstens einer LED und einer Betriebsschaltung nach einem der vorigen Ansprüche.

13. Verfahren zur Versorgung wenigstens einer LED-Strecke (D10) mit wenigstens einer LED,

- wobei einer Betriebsschaltung an wenigstens einem eingangsseitigen Anschluss eine Versorgungsspannung zuführbar ist,
- wobei die Betriebsschaltung wenigstens eine Steuereinheit (SE') und einen Konverter, vorzugsweise einen Buck-Konverter, aufweist, wobei die Betriebsschaltung einen durch die Steuereinheit (SE') getakteten ersten Schalter (S1) des Konverters aufweist, ausgehend von dem die wenigstens eine LED-Strecke (D10) elektrisch versorgbar ist,
- wobei die Steuereinheit (SE') an einem ersten Spannungsteiler (R11, R12) der Betriebsschaltung einen die Anoden-Spannung ($V_{Bus}$') der wenigstens einen LED-Strecke wiedergebenden ersten elektrischen Parameter ermittelt,
- wobei die Steuereinheit (SE') einen den Strom durch den Schalter (S1) wiedergebender dritten elektrischen Parameter direkt oder indirekt an einem Mess-Widerstand (Rshunt) der Betriebsschaltung ermittelt unter Verwendung des dritten elektrischen Parameters den LED-Strom ($I_{LED}$') durch die wenigstens eine LED-Strecke (D10) als Istwert bestimmt, den Istwert mit einem Sollwert (Isoll) vergleicht und abhängig von dem Vergleich eine hochfrequente Taktung des Schalters (S1) bspw. durch PWM-Modulation verändert,

**dadurch gekennzeichnet, dass**

- die Steuereinheit (SE') mittels einer Filterschaltung (R22, C22) der Betriebsschaltung einen die Kathoden-Spannung (Vx) wiedergebenden zweiten elektrischen Parameter ermittelt, wobei die Filterschaltung ein vorzugsweise analoges Tiefpassfilter zweiter oder höherer Ordnung oder ein Bandpassfilter ist,
- die Steuereinheit (SE') die Spannung an der wenigstens einen LED-Strecke ($V_{LED}$') aus dem ersten und dem zweiten elektrischen Parameter bestimmt,
- die Steuereinheit (SE') den LED-Strom ($I_{LED}$') aus dem Produkt des ersten elektrischen Parameters und des dritten elektrischen Parameters dividiert durch die Spannung ($V_{LED}$') an der wenigstens einen LED-Strecke bestimmt.

**Claims**

1. Operating circuit for supplying at least one LED section (D10) having at least one LED, wherein the operating circuit has a control unit (SE') and a converter, preferably a buck converter,

    - wherein an electrical supply can be fed to the operating circuit at least at one input-side connection, and the operating circuit has at least one first switch (S1) of the converter which is clocked by the control unit (SE') and from which the at least one LED section (D10) can be electrically supplied,
    - wherein the control unit (SE') is configured to determine a first electrical parameter representing the anode voltage ($V_{Bus}$') of the at least one LED section at a first voltage divider (R11, R12) of the operating circuit,
    - wherein the control unit (SE') is configured to determine a third electrical parameter representing the current through the switch (S1) directly or indirectly at a measuring resistor (Rshunt) of the operating circuit, to determine the LED current ($I_{LED}$') through the at least one LED section (D10) as an actual value using the third electrical parameter, to compare the actual value with a target value (Itarget) and, depending on the comparison, to change a high-frequency clocking of the switch (S1), for example via PWM modulation,

    **characterized in that**

    - the control unit (SE') is further configured to determine a second electrical parameter representing the cathode voltage (Vx) of the at least one LED section by means of a filter circuit (R22, C22) of the operating circuit, wherein the filter circuit is a preferably analog low-pass filter of second or higher order or a band-pass filter,
    - the control unit (SE') is further configured to determine the voltage at the at least one LED section ($V_{LED}$') from the first and the second electrical parameter,
    - the control unit (SE') is further configured to determine the LED current ($I_{LED}$') from the product of the first electrical parameter and the third electrical parameter, divided by the voltage ($V_{LED}$') at the at least one LED section.

2. Operating circuit according to claim 1, wherein the control unit (SE') is configured to determine the voltage ($V_{LED}$') at the at least one LED section (D10) as a difference of the first and the second electrical parameter.

3. Operating circuit according to one of the previous claims, wherein the control unit (SE') is configured to average the current through the switch (S1).

4. Operating circuit according to one of the previous claims, wherein the operating circuit is designed to supply the current ($I_{LED}$') through the LED section (D10) to the control unit (SE') as a feedback signal, and wherein the control unit (SE') is configured to control the switch-on time of the switch (S1).

5. Operating circuit according to claim 3, wherein the control unit (SE') comprises a low-pass filter for averaging the current through the switch (S1), wherein the low-pass filter is designed to detect a time average of the current through the switch (S1).

6. Operating circuit according to one of the previous claims, wherein the operating circuit is designed to combine a first PWM signal driving the switch (S1) with a second PWM signal, wherein the second PWM signal is low-frequency relative to the frequency of the first PWM signal.

7. Operating circuit according to claim 6, wherein the control unit (SE') is designed to control a duty cycle of the first PWM signal.

8. Operating circuit according to claim 6 or 7, wherein the control unit (SE') is configured to calibrate the determined actual value of the current through the LED section (D10) prior to a comparison with the target value ($I_{Target}$).

9. Operating circuit according to claim 8, wherein the calibration compensates for the deviation of the current through the at least one LED section, or the luminous flux, from the measured current through the switch (S1) and eliminates measurement errors of the indirect measurement.

10. Operating circuit according to claim 9, wherein the control unit (SE') is configured to compare the actual value compensated by the calibration with the target value for the current through the LED section (D10) and to change the high-frequency clocking of the switch (S1) or the first PWM signal as a control variable for regulating the current through the LED section (10).

11. Operating circuit according to one of claims 6, 7 and 10, wherein the control unit (SE') is configured to carry out a control algorithm on the control difference resulting from the comparison of the actual value and target value for the current through the at least one LED section, to which control algorithm is fed an actuating value for driving the switch (S1) of the converter, and to change the first PWM signal as a function thereof.

12. Luminaire comprising an LED section having at least one LED and an operating circuit according to one of the previous claims.

13. Method for supplying at least one LED section (D10) having at least one LED,

- wherein a supply voltage can be fed to an operating circuit at least at one input-side connection,
- wherein the operating circuit has at least one control unit (SE') and a converter, preferably a buck converter, wherein the operating circuit has a first switch (S1) of the converter which is clocked by the control unit (SE') and from which the at least one LED section (D10) can be electrically supplied,
- wherein the control unit (SE') determines a first electrical parameter representing the anode voltage ($V_{Bus}'$) of the at least one LED section at a first voltage divider (R11, R12) of the operating circuit,
- wherein the control unit (SE') determines a third electrical parameter representing the current through the switch (S1) directly or indirectly at a measuring resistor (Rshunt) of the operating circuit, determines the LED current ($I_{LED}'$) through the at least one LED section (D10) as an actual value using the third electrical parameter, compares the actual value with a target value (Itarget) and, depending on the comparison, changes a high-frequency clocking of the switch (S1), for example via PWM modulation,

**characterized in that**

- the control unit (SE') determines a second electrical parameter representing the cathode voltage (Vx) by means of a filter circuit (R22, C22) of the operating circuit, wherein the filter circuit is a preferably analog low-pass filter of second or higher order or a band-pass filter,
- the control unit (SE') determines the voltage at the at least one LED section ($V_{LED}'$) from the first and the second electrical parameter,
- the control unit (SE') determines the LED current ($I_{LED}'$) from the product of the first electrical parameter and the third electrical parameter, divided by the voltage ($V_{LED}'$) at the at least one LED section.

**Revendications**

1. Circuit de fonctionnement pour l'alimentation d'au moins une rangée de DEL (D10) présentant au moins une DEL, le circuit de fonctionnement présentant une unité de commande (SE') et un convertisseur, de préférence un convertisseur Buck,

- le circuit de fonctionnement pouvant être alimenté en électricité au niveau d'au moins un raccord côté entrée et le circuit de fonctionnement présentant au moins un premier commutateur (S1) du convertisseur ; cadencé par l'unité de commande (SE'), à partir duquel l'au moins une rangée de DEL (D10) peut être alimentée en électricité,

- l'unité de commande (SE') étant conçue pour déterminer au niveau d'un premier diviseur de tension (R11, R12) du circuit de fonctionnement un premier paramètre électrique reflétant la tension anodique ($V_{Bus}$') de l'au moins une rangée de DEL,

- l'unité de commande (SE') étant conçue pour déterminer un troisième paramètre électrique reflétant le courant à travers le commutateur (S1) directement ou indirectement au niveau d'une résistance de mesure (Rshunt) du circuit de fonctionnement, pour déterminer à l'aide du troisième paramètre électrique le courant de DEL ($I_{LED}$') à travers de l'au moins une rangée de DEL (D10) en tant que valeur instantanée, pour comparer la valeur instantanée à une valeur de consigne ($I_{soll}$) et pour modifier, en fonction de la comparaison, une cadence à haute fréquence du commutateur (S1) par exemple par une modulation PWM (modulation de largeur d'impulsion),

**caractérisé en ce que**

- l'unité de commande (SE') est en outre conçue pour déterminer, à l'aide d'un circuit de filtrage (R22, C22) du circuit de fonctionnement, un deuxième paramètre électrique reflétant la tension cathodique (Vx) de l'au moins une rangée de DEL, le circuit de filtrage étant de préférence un filtre passe-bas analogique de second ordre ou d'un ordre supérieur ou un filtre passe-bande,

- l'unité de commande (SE') est en outre conçue pour déterminer la tension au niveau de l'au moins une rangée de DEL ($V_{LED}$') à partir du premier et du deuxième paramètre électrique,

- l'unité de commande (SE') est en outre conçue pour déterminer le courant de DEL ($I_{LED}$') à partir du produit du premier paramètre électrique et du troisième paramètre électrique divisé par la tension ($V_{LED}$') au niveau de l'au moins une rangée de DEL.

2. Circuit de fonctionnement selon la revendication 1, l'unité de commande (SE') étant conçue pour déterminer la tension ($V_{LED}$') au niveau de l'au moins une rangée de DEL (D10) comme différence du premier et du deuxième paramètre électrique.

3. Circuit de fonctionnement selon l'une quelconque des revendications précédentes, l'unité de commande (SE') étant conçue pour moyenner le courant à travers le commutateur (S1).

4. Circuit de fonctionnement selon l'une quelconque des revendications précédentes, le circuit de fonctionnement étant conçu pour fournir le courant ($I_{LED}$') à travers la rangée de DEL (D10) à l'unité de commande (SE') en tant que signal de retour et l'unité de commande (SE') étant conçue pour commander la durée d'enclenchement du commutateur (S1).

5. Circuit de fonctionnement selon la revendication 3, l'unité de commande (SE') présentant un filtre passe-bas pour moyenner le courant à travers le commutateur (S1), le filtre passe-bas étant conçu pour détecter une valeur moyenne temporelle du courant à travers le commutateur (S1).

6. Circuit de fonctionnement selon l'une quelconque des revendications précédentes, le circuit de fonctionnement étant conçu pour combiner un premier signal de PWM commandant le commutateur (S1) avec un deuxième signal de PWM, le deuxième signal de PWM étant de basse fréquence par rapport à la fréquence du premier signal PWM.

7. Circuit de fonctionnement selon la revendication 6, l'unité de commande (SE') étant conçue pour commander un rapport d'impulsions du premier signal de PMW.

8. Circuit de fonctionnement selon la revendication 6 ou 7, l'unité de commande (SE') étant conçue pour étalonner la valeur instantanée déterminée du courant à travers la rangée de DEL (D10) avant une comparaison avec la valeur de consigne ($I_{Soll}$).

9. Circuit de fonctionnement selon la revendication 8, l'étalonnage compensant l'écart du courant à travers l'au moins une rangée de DEL ou, selon le cas, du flux lumineux, par rapport au courant mesuré à travers le commutateur (S1) et éliminant des erreurs de mesure de la mesure indirecte.

10. Circuit de fonctionnement selon la revendication 9, l'unité de commande (SE') étant conçue pour comparer la valeur instantanée compensée par l'étalonnage à la valeur de consigne pour le courant à travers la rangée de DEL (D10) et pour modifier, en tant que grandeur de commande pour la régulation du courant à travers la rangée de DEL (10), la cadence haute fréquence du commutateur (S1) ou, selon le cas, le premier signal de PWM.

11. Circuit de fonctionnement selon l'une quelconque des revendications 6, 7 et 10, l'unité de commande (SE') étant conçue pour exécuter un algorithme de régulation qui reçoit une valeur de réglage pour la commande du commutateur (S1) du convertisseur, sur la différence de régulation obtenue à partir de la comparaison de la valeur instantanée et de la valeur de consigne pour le courant à travers l'au moins une rangée de DEL, et pour modifier, en fonction de cela, le premier signal de PWM.

12. Luminaire présentant une rangée de DEL présentant au moins une DEL et un circuit de fonctionnement selon l'une quelconque des revendications précédentes.

13. Procédé pour alimenter au moins une rangée de DEL (D10) présentant au moins une DEL,

- un circuit de fonctionnement pouvant être alimenté en électricité au niveau d'au moins un raccord côté entrée,
- le circuit de fonctionnement présentant au moins une unité de commande (SE') et un convertisseur, de préférence un convertisseur de Buck, le circuit de fonctionnement présentant un premier commutateur (S1) du convertisseur, cadencé par l'unité de commande (SE'), à partir duquel l'au moins une rangée de DEL (D10) peut être alimentée en électricité,
- l'unité de commande (SE') déterminant au niveau d'un premier diviseur de tension (R11, R12) du circuit de fonctionnement un premier paramètre électrique reflétant la tension anodique ($V_{Bus}$') de l'au moins une rangée de DEL,
- l'unité de commande (SE') déterminant un troisième paramètre électrique reflétant le courant à travers le commutateur (S1) directement ou indirectement au niveau d'une résistance de mesure (Rshunt) du circuit de fonctionnement, déterminant à l'aide du troisième paramètre électrique le courant de DEL ($I_{LED}$') à travers l'au moins une rangée de DEL (D10) en tant que valeur instantanée, comparant la valeur instantanée à une valeur de consigne (Isoll) et modifiant, en fonction de la comparaison, une cadence à haute fréquence du commutateur (S1), par exemple par une modulation PWM (modulation de largeur d'impulsion),

caractérisé en ce que

- l'unité de commande (SE') détermine, à l'aide d'un circuit de filtrage (R22, C22) du circuit de fonctionnement, un deuxième paramètre électrique reflétant la tension cathodique (Vx), le circuit de filtrage étant de préférence un filtre passe-bas analogique de second ordre ou d'un ordre supérieur ou un filtre passe-bande,
- l'unité de commande (SE') détermine la tension au niveau de l'au moins une rangée de DEL ($V_{LED}$') à partir du premier et du deuxième paramètre électrique,
- l'unité de commande (SE') détermine le courant de DEL ($I_{LED}$') à partir du produit du premier paramètre électrique et du troisième paramètre électrique divisé par la tension ($V_{LED}$') au niveau de l'au moins une rangée de DEL.

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- DE 102006034371 A1
- DE 102011088966 A1
- DE 2012206044 A1
- DE 2012007478 A1
- US 20050201524 A1
- US 20070104075 A1